# FASCICULE DE BREVET EUROPEEN

(11) **EP 1 847 975 B1**
(45) Date de publication et mention de la délivrance du brevet: **07.10.2009**
(21) Numéro de dépôt: 07007856.3
(22) Date de dépôt: 18.04.2007
(51) Int. Cl.: G08C 19/28, G08C 17/02

(54) **Procédé de test et d'installation d'une télécommande domotique**
Verfahren zum Testen und Installieren einer Heimfernbedienung
Method of testing and installing a home automation remote control

(30) Priorité: 19.04.2006 FR 0603447
(43) Date de publication de la demande: 24.10.2007
(73) Titulaire: Somfy SAS, 74300 Cluses (FR)
(72) Inventeur: Rouhier, Valérie, 74300 Thyez (FR); Orsat, Jean-Michel, 74300 Chatillon-sur-Cluses (FR); Pellarin, Florent, 74370 Saint-Martin Bellevue (FR)
(74) Mandataire: Bugnion Genève

(56) Documents cités:
- WO-A-00/39772
- WO-A2-02/07122
- US-B1- 6 437 836

## Description

L'invention concerne un procédé de test et d'installation d'une télécommande pour commander des éléments d'un réseau domotique destinés à la gestion de la sécurité ou du confort thermique ou lumineux dans un bâtiment. Elle concerne encore un support de données comprenant un logiciel permettant la mise en oeuvre d'un tel procédé.

Dans les installations domotiques, il est courant qu'un ensemble de télécommandes utilise une communication radiofréquences pour transmettre des ordres de commande à des actionneurs ou recevoir des informations d'état depuis des actionneurs dans un bâtiment.

De tels actionneurs permettent par exemple la manoeuvre d'équipements mobiles de fermeture, tels que portes, portails, volets enroulables, serrures, de protection solaire, tels que stores ou écrans filtrants, de ventilation, tels que volets d'aération, ou de projection multimédia (écrans de projection). Les actionneurs peuvent également agir sur des dispositifs de chauffage, de climatisation, de ventilation, ou d'éclairage.

Les actionneurs et les télécommandes communiquent également par radiofréquences avec des capteurs mesurant des grandeurs physiques telles que température, humidité, vitesse du vent, éclairement, luminance, etc., susceptibles d'affecter le confort ou la consommation énergétique du bâtiment.

La communication radiofréquences de la plupart des éléments (actionneurs, capteurs, télécommandes) de l'installation est bidirectionnelle, mais certains éléments communiquent uniquement de manière unidirectionnelle.

Tous les éléments de l'installation possèdent un moyen d'identification commun qui leur permet de savoir qu'ils appartiennent à une même installation, et d'ignorer des signaux radiofréquences qui ne leurs sont pas destinés. Ce moyen d'identification est par exemple une « clé maison » qui comprend un germe dupliqué dans un algorithme de calcul utilisé lors de chaque processus d'authentification.

Les éléments de l'installation contiennent également en mémoire la liste des éléments qu'ils commandent, ou inversement la liste des éléments auxquels ils obéissent, ou encore la liste des éléments dont ils reçoivent des informations de mesure.

L'introduction d'une nouvelle télécommande dans l'installation nécessite de la faire connaître de tous les équipements qu'elle va commander et/ou inversement qu'elle acquiert la liste de ceux-ci. Cette opération de configuration peut être plus ou moins fastidieuse à réaliser.

Les demandes de brevet WO 03/069794, WO 03/069573, WO 03/049375 et WO 03/107105, décrivent plusieurs moyens complémentaires permettant de simplifier les opérations de configuration.

Dans la dernière demande, un outil de type ordinateur PC est utilisé par l'installateur par exemple pour servir d'intermédiaire dans la transmission de données entre télécommandes et actionneurs, ou inversement entre actionneurs et télécommandes, et pour faciliter l'établissement de liens entre ces données.

Dans le brevet US 6,791,467, une télécommande universelle est apte à communiquer, et à donner des ordres de commande, avec tous les équipements ménagers se trouvant à portée radio. Les équipements, par l'intermédiaire d'une unité complémentaire d'équipement, fournissent à la télécommande universelle les données nécessaires à la commande. L'écran de la télécommande universelle est apte à représenter un panneau de contrôle virtuel de l'équipement.

On connaît également du document WO 00/39772 une méthode de configuration et de test d'une télécommande dans laquelle la télécommande est émulée sur un ordinateur. La télécommande virtuelle ainsi obtenue peut commander différents équipements et les configurations effectuées sur la télécommande virtuelle peuvent être déchargées vers une télécommande réelle semblable.

L'invention peut être appliquée à un petit bâtiment commercial, présentant une certaine complexité, mais elle est principalement destinée à faciliter l'achat et l'installation d'un nouveau type de télécommande dans une installation domestique existante, par exemple une maison comprenant déjà plusieurs actionneurs, télécommandes et/ou capteurs du type décrit.

En effet, l'offre technique des fabricants de télécommandes évoluant, les nouveaux modèles présentent une ergonomie ou de nouvelles fonctionnalités non connues de l'utilisateur. De plus, plusieurs fabricants utilisant le même protocole de communication proposent des modèles de télécommandes présentant une esthétique et des interfaces différentes pour commander les mêmes équipements avec des fonctionnalités plus ou moins avancées.

Il est de l'intérêt de l'utilisateur de pouvoir comparer plusieurs modèles de télécommandes avant de faire son choix. Cependant, cette étape de comparaison peut nécessiter au moins une semaine, voire beaucoup plus si la commande comprend des fonctionnalités hebdomadaires ou saisonnières.

Pour permettre cette comparaison, le distributeur de télécommandes doit prêter à l'utilisateur une télécommande voire plusieurs télécommandes pendant plusieurs jours, semaines ou mois. Ceci impose des contraintes logistiques considérables, en particulier lorsqu'il est nécessaire de prêter simultanément des télécommandes à différents utilisateurs.

Le but de l'invention est de fournir un procédé de test et d'installation de télécommande remédiant aux inconvénients identifiés précédemment et améliorant les procédés de test connus de l'art antérieur. En particulier, l'invention permet de s'affranchir d'un certain nombre de contraintes logistiques liées au prêt de télécommandes à des utilisateurs pendant des périodes relativement longues. L'invention permet aussi de comparer la performance ou la réaction de deux télécommandes dans des contextes quasi-identiques. L'invention permet également de faciliter l'installation d'une nouvelle télécommande dans une installation domotique existante. L'invention se rapporte aussi à une télécommande permettant de mettre en oeuvre un tel procédé.

Le procédé selon l'invention est défini par la revendication 1.

Différents modes d'exécution de ce procédé sont définis par les revendications dépendantes 2 à 8.

Un support de données selon l'invention est défini par la revendication 9.

Une télécommande selon l'invention est défini par la revendication 10.

Le dessin annexé représente, à titre d'exemple, un mode d'exécution d'une installation permettant la mise en oeuvre d'un mode d'exécution du procédé selon l'invention.

La figure 1 est un schéma d'une installation domotique pour mettre en oeuvre un mode d'exécution du procédé selon l'invention.

La figure 2 est un schéma représentant les informations de configuration d'une nouvelle télécommande insérée dans l'installation.

La figure 3 représente un ordinogramme d'un mode de réalisation d'un procédé de test et d'installation d'une nouvelle télécommande selon l'invention.

La figure 4 représente un ordinogramme d'une première variante d'exécution de l'étape E14 de la figure 3.

La figure 5 représente un ordinogramme d'une deuxième variante d'exécution de l'étape E14 de la figure 3.

La figure 6 est un schéma de détail d'une télécommande selon l'invention.

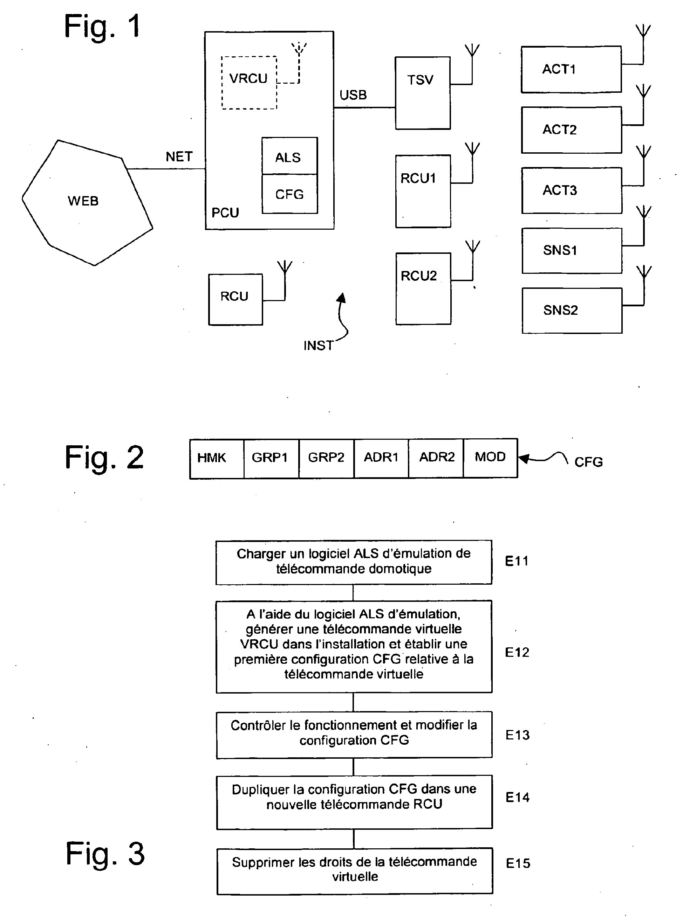

L'installation INST représentée à la figure 1 comprend un ordinateur PCU par exemple de type PC muni de moyens de saisie tels que notamment un clavier et une souris et d'un écran de visualisation (non représentés).

Cet ordinateur est raccordé au réseau Internet WEB par une liaison réseau NET. Alternativement, la référence NET peut représenter une liaison à un lecteur de données, par exemple un lecteur de disque optique DVD, et la référence WEB peut représenter le lecteur de données.

L'ordinateur est par ailleurs raccordé à un transmetteur radio bidirectionnel TSV, représenté par un bloc rectangulaire et une antenne, par l'intermédiaire d'une liaison périphérique par exemple filaire de type USB. Alternativement, le transmetteur TSV peut être intégré dans l'ordinateur dans une version standard, ou encore dans une version spécifique d'ordinateur utilisée en tant qu'outil spécialisé.

Le transmetteur radio bidirectionnel TSV peut communiquer par radiofréquences grâce à un protocole commun avec plusieurs actionneurs ACT1, ACT2, ACT3 pilotant des équipements domotiques installés dans le bâtiment.

Chaque actionneur est représenté par un bloc rectangulaire muni d'une antenne pour schématiser les moyens nécessaires à la liaison radiofréquences. Tous les éléments communiquent donc selon un même support physique et selon un même protocole définissant un même réseau domotique dès lors qu'une même clé d'authentification est partagée par tous les éléments.

Le premier actionneur ACT1 comprend un motoréducteur dont l'arbre de sortie entraîne le mouvement d'un portail. Le deuxième actionneur ACT2 agit sur un moyen de chauffage-climatisation. Le troisième actionneur ACT3 agit sur un moyen d'éclairage. Dans chaque cas, l'actionneur comprend tous les moyens nécessaires à la réception d'un message contenant un ordre de commande, à l'interprétation de l'ordre et à son exécution. L'actionneur comprend également les moyens nécessaires à la génération de messages relatifs à son état (ou à l'état de l'équipement associé à l'actionneur) et à l'émission de tels messages dans le réseau domotique.

Tous ces moyens, de même que les moyens d'alimentation de l'actionneur, ne sont pas représentés car connus de l'homme du métier et sans incidence dans la mise en oeuvre de l'invention.

L'installation INST comprend également un capteur SNS1 de type météorologique donnant des informations sur les conditions extérieures au bâtiment (par exemple vitesse de vent, température, ensoleillement, détection périmétrique d'approche,...) et un capteur SNS2 donnant des informations sur les conditions intérieures au bâtiment (température, éclairement, détection de présence...). Ces capteurs comprennent de même des moyens de communication leur permettant de communiquer avec le reste du réseau domotique.

L'installation INST comprend également une télécommande RCU1 et une télécommande RCU2, qui comprennent également des moyens de communication leur permettant de communiquer avec le reste du réseau domotique.

Une nouvelle télécommande RCU est destinée à être intégrée au réseau domotique. Le procédé d'installation de celle-ci dans le réseau domotique est décrit plus bas.

Au terme du processus d'installation, la nouvelle télécommande contient une série de données de configuration CFG représentée à la figure 2. Cette série comprend notamment :
- une valeur numérique d'une clé maison HMK, partagée par tous les éléments de l'installation,
- un premier identifiant de groupe GRP1, relatif à un premier groupe d'éléments commandés simultanément par cette télécommande pour un premier type d'ordre,
- un deuxième identifiant de groupe GRP2, relatif à un deuxième groupe d'éléments commandés simultanément par cette télécommande pour un deuxième type d'ordre
- un code adresse ADR1 d'un premier capteur interrogeable par la télécommande sur activation d'un troisième type d'ordre,
- le code adresse ADR2 d'un deuxième capteur interrogeable par la télécommande sur activation d'un quatrième type d'ordre,
- une séquence numérique de mode MOD comprenant des informations relatives au paramétrage de la télécommande elle-même par l'utilisateur : par exemple, choix d'affectation de certaines touches à certaines fonctions ou à un type d'ordre particulier, sensibilité d'appui sur une touche, type d'affichage, vitesse de curseur, langue utilisée dans les dialogues, paramètres horaires, journaliers, hebdomadaires, saisonniers, etc.

Alternativement, les identifiants de groupe peuvent être remplacés par la liste des identifiants (ou adresses) individuels de tous les éléments constituant chaque groupe.

Inversement, une fois l'installation de la nouvelle télécommande terminée, tous les actionneurs susceptibles d'obéir à des ordres spécifiques provenant de cette nouvelle télécommande ont mis en mémoire un identifiant relatif à cette télécommande afin de pouvoir la reconnaître. Ainsi, la sécurité de l'installation est-elle assurée par la présence d'une clé maison HMK dans la télécommande et/ou par l'enregistrement d'un identifiant de la télécommande dans tous les actionneurs obéissant à la télécommande, créant ainsi des liens d'authentification entre télécommande et actionneurs.

Toutes ces opérations d'installation et de configuration sont réalisables avec les procédés décrits dans les documents de l'art antérieur.

Un procédé de test d'une nouvelle télécommande dans une installation domotique existante est décrit en référence à la figure 3.

Dans une première étape E11, l'utilisateur installe, à son domicile, sur son ordinateur personnel PCU un logiciel d'émulation d'une télécommande domotique qu'il a prévu de tester en vue de l'acquérir. L'installation du logiciel peut se faire grâce à un disque support de données numériques contenant le logiciel d'émulation qui a été remis à l'utilisateur par le distributeur de télécommandes ou par téléchargement du logiciel d'émulation via le réseau internet.

Le logiciel d'émulation ALS comprend un ensemble des programmes exécutables nécessaires à la simulation fonctionnelle d'une télécommande domotique réelle et, de préférence, à la visualisation de la télécommande émulée dont les touches sont activables à l'aide de l'interface de saisie de l'ordinateur par exemple via le clavier, la souris, ou un écran tactile.

Le logiciel d'émulation ALS comprend ainsi des moyens logiciels pour activer le transmetteur bidirectionnel TSV selon les ordres à transmettre, des moyens logiciels pour afficher sur l'image de la télécommande émulée les messages qu'afficherait l'écran de la commande domotique réelle lors de sa manipulation ou lors de la réception de messages par le transmetteur bidirectionnel TSV.

Le logiciel d'émulation peut être similaire à celui utilisé dans le brevet US 6,791,467.

Dans une deuxième étape E12, l'utilisateur utilise son ordinateur pour réaliser toutes les manipulations de configuration de la télécommande émulée ou télécommande virtuelle, comme il l'aurait fait avec une nouvelle télécommande domotique réelle.

De façon imagée, la télécommande virtuelle VRCU est représentée sous forme d'un bloc en trait pointillé à l'intérieur de l'ordinateur PCU.

A l'issue de la deuxième étape E12, l'ensemble de la configuration CFG est donc stocké dans la mémoire de l'ordinateur, comme représenté en figure 1.

Une fois la télécommande virtuelle configurée, l'utilisateur peut commander les différents éléments de l'installation avec celle-ci et vérifier par lui-même l'intérêt de certaines fonctionnalités nouvelles offertes par la nouvelle télécommande qu'il envisage d'acheter. En particulier, l'utilisateur aura créé tous les liens d'authentification entre la télécommande virtuelle et les éléments de l'installation et des droits d'émission d'ordres sont ainsi attribués à la télécommande virtuelle.

Dans une troisième étape E13, l'utilisateur contrôle le fonctionnement de la télécommande virtuelle et modifie, le cas échéant, sa configuration de manière à ce que celle-ci réponde au mieux à ses besoins et attentes.

La durée d'utilisation de la télécommande virtuelle peut être limitée. Pour ce faire, on limite la durée de la période pendant laquelle l'utilisation du logiciel d'émulation de la télécommande est possible. Cette durée peut par exemple être d'un mois. A l'issue de cette durée, les droits d'émission d'ordres de la télécommande virtuelle sont supprimés. Pendant cette durée, la télécommande virtuelle aura permis à l'utilisateur de se faire une opinion sur la télécommande qu'il envisage d'acheter. En effet, pendant cette durée, hormis le fait que l'utilisateur doit agir sur la télécommande virtuelle par le biais de son ordinateur, la télécommande virtuelle fonctionne exactement comme fonctionnerait la télécommande réelle, notamment en utilisant les informations issues des capteurs pour générer des ordres en fonction du paramétrage réalisé par l'utilisateur.

La télécommande virtuelle peut aussi être utilisée pour enregistrer un ou plusieurs scénarios de fonctionnement, l'enregistrement d'un scénario nécessitant celui de données dans la télécommande virtuelle et/ou dans les actionneurs participant au scénario.

Quand la suppression des droits a lieu à l'issue d'une durée prédéterminée, un message préalable est préférentiellement émis par la télécommande virtuelle de manière à commander l'effacement des données enregistrées dans les actionneurs ou capteurs de l'installation pendant la phase d'utilisation de la télécommande virtuelle.

Dans une quatrième étape E14, l'utilisateur qui a fait l'acquisition de la télécommande réelle RCU, amène celle-ci à portée des autres éléments de l'installation. L'intégration de cette nouvelle télécommande RCU dans l'installation se fait alors très aisément. En effet, la configuration CFG de la télécommande virtuelle peut être dupliquée de la mémoire de l'ordinateur vers la nouvelle télécommande RCU. La configuration CFG est transmise, par radiofréquences, à l'aide du transmetteur TSV de l'ordinateur. Comme décrit plus loin, cette transmission est par exemple automatique et se produit dès que l'ordinateur détecte, dans la zone de portée radio du transmetteur TSV, une télécommande non encore programmée de même type que celle émulée dans l'ordinateur. Dès la duplication de la configuration de la télécommande virtuelle dans la télécommande effectuée, les droits d'émission d'ordres de la télécommande virtuelle peuvent être supprimés.

Dans une cinquième étape E15, les droits d'émission de la télécommande virtuelle via le transmetteur TSV sont supprimés, de manière à éviter des conflits entre des télécommandes virtuelle et réelle de même type ayant les mêmes réglages. Le logiciel d'émulation ALS et la configuration CFG sont néanmoins conservés dans la mémoire de l'ordinateur de manière à pouvoir être éventuellement réutilisés pour la configuration d'une autre nouvelle télécommande, par exemple en cas de problème sur la première.

Le mode d'exécution du procédé est susceptible de plusieurs variantes. En particulier, les étapes E11 à E13 peuvent être dupliquées : Plusieurs logiciels d'émulation sont alors chargés et exécutés de manière à pouvoir tester simultanément plusieurs modèles de télécommandes.

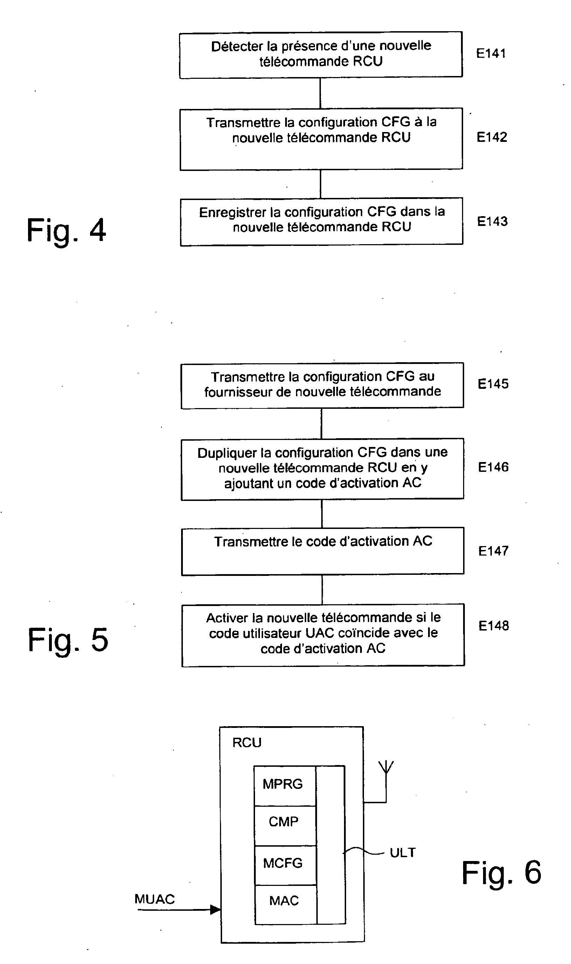

La figure 4 représente une première variante de la quatrième étape E14 de duplication de la configuration. Dans une première sous-étape E141, la présence d'une nouvelle télécommande RCU, non déjà connue par la télécommande virtuelle, est détectée par le transmetteur bidirectionnel TSV. Cette détection est par exemple automatique, dès que la nouvelle télécommande est a portée radio et qu'un appui sur une des touches de cette nouvelle télécommande provoque une émission. Alternativement, une séquence particulière d'appuis de touches provoque cette détection. Dans une deuxième sous étape E142, la configuration CFG est transmise à la nouvelle télécommande RCU par radio à l'aide du transmetteur bidirectionnel TSV. Cette transmission est initiée automatiquement par l'étape précédente. Alternativement, elle résulte d'une action de l'utilisateur sur la télécommande virtuelle. Enfin, dans une troisième sous-étape E143, les données de configuration reçues sont enregistrées dans la nouvelle télécommande RCU.

La figure 5 représente une deuxième variante de la quatrième étape E14 de duplication de la configuration. Dans une première sous-étape E145, la configuration CFG est transmise par l'utilisateur (ou par l'installateur) au fournisseur de nouvelles télécommandes, par exemple leur fabricant ou leur distributeur, depuis l'ordinateur PCU. Cette transmission a lieu de manière sécurisée si elle utilise le réseau Internet WEB.

Dans une deuxième sous-étape E146, le fournisseur duplique la configuration CFG dans une nouvelle télécommande RCU, commandée par l'utilisateur. Lors de cette sous-étape, un code d'activation enregistré AC est également mis en mémoire dans la nouvelle télécommande RCU. Dans une troisième sous-étape E147, le code d'activation est transmis, indépendamment de la nouvelle télécommande, à l'utilisateur par le fournisseur. La nouvelle télécommande est envoyée séparément à l'utilisateur. Dans une quatrième sous-étape E148, l'utilisateur entre un code d'activation utilisateur UAC dans la nouvelle télécommande. S'il y a coïncidence du code d'activation entré avec le code d'activation enregistré, alors la nouvelle télécommande est activée et se comporte aussitôt comme la télécommande virtuelle. La fourniture du code d'activation se fait au moyen du clavier de la nouvelle télécommande, par l'insertion d'une carte à mémoire s'il a été transmis sous cette forme à l'utilisateur, ou par tout autre moyen (par exemple une lecture optique). La figure 6 décrit une télécommande RCU. Elle comprend une unité logique de traitement ULT comprenant une mémoire MPRG de stockage de programmes de fonctionnement de la télécommande, une mémoire de configuration MCFG, une mémoire MAC de code d'activation pré-enregistré AC, un moyen d'entrée du code d'activation utilisateur MUAC, et un moyen CMP de comparaison des codes et d'activation de la télécommande s'il y a coïncidence.

Par coïncidence, il ne faut pas entendre nécessairement identité, mais au moins correspondance ou complémentarité. L'algorithme servant à la création du code d'activation peut engendrer deux codes différents, l'un pour l'enregistrement dans la télécommande par le fournisseur, l'autre pour être communiqué à l'utilisateur. Ces deux codes sont complémentaires et reconnus comme tels par l'algorithme contenu dans le moyen de comparaison.

La mémoire MPRG contient les programmes régissant le fonctionnement de la télécommande : ils constituent des moyens logiciels permettant de mettre en oeuvre le procédé selon l'invention.

Cette variante est intéressante si l'utilisateur préfère une simple démonstration par un installateur des fonctionnalités de la télécommande qu'il s'apprête à acquérir, en laissant à l'installateur le soin de configurer l'installation avec la télécommande virtuelle, sur un ordinateur portable de l'installateur et conservé par celui-ci après démonstration. Il est ainsi évité les conséquences d'une perte ou vol de la télécommande RCU pendant la phase de livraison.

Par suppression des droits d'émission, il faut entendre que la télécommande virtuelle n'est plus en mesure de commander les divers éléments de l'installation. Cela peut-être par exemple réalisé par inhibition du programme d'émulation, par inhibition du transmetteur bidirectionnel, ou par suppression de la clé maison HMK servant à authentifier la télécommande virtuelle comme élément de l'installation.
La suppression des droits peut aussi avoir lieu en deux temps. Dans un premier temps, la télécommande virtuelle ne peut plus commander les divers éléments de l'installation mais peut communiquer avec la nouvelle télécommande. Dans un deuxième temps, le lien avec la nouvelle télécommande est supprimé. Le deuxième temps est optionnel.

Dans toutes les variantes, l'étape de suppression des droits d'émission d'ordres de la télécommande virtuelle résulte de l'étape de duplication de la configuration. En effet, la suppression des droits d'émission d'ordres peut automatiquement résulter de l'une des sous-étapes de duplication.

Par exemple, dans la première variante, la suppression des droits peut être provoquée dès détection de la présence de la nouvelle télécommande par le transmetteur bidirectionnel, mais il est préférable d'attendre que le transfert de la configuration ait été effectué.

Dans la deuxième variante, la suppression des droits peut avoir lieu dès la première sous-étape de transfert de la configuration vers le fournisseur. L'exécution de ce transfert via Internet peut par exemple rester impossible tant que l'utilisateur n'a pas cliqué sur un bouton d'autorisation de suppression des droits. Elle peut résulter de la sous-étape de transmission à l'utilisateur du code d'activation, si ce code est transmis par Internet sur l'ordinateur supportant la télécommande virtuelle : dès réception d'un message comportant le code d'accès, les droits sont automatiquement supprimés. Elle peut résulter de la sous-étape de reconnaissance du bon code d'activation par la nouvelle télécommande, par émission automatique d'une commande spécifique par cette nouvelle télécommande.

Enfin, la suppression des droits peut résulter automatiquement d'une première opération d'émission d'ordre de la nouvelle télécommande : dès que le transmetteur TSV détecte une transmission radiofréquences comportant un même identifiant que celui de la télécommande virtuelle, le logiciel d'émulation provoque la suppression des droits de la télécommande virtuelle, même si le message est adressé à un autre élément de l'installation.

Dès que les droits de communication des télécommandes virtuelles ont pris fin, l'ordinateur PCU ne fait plus partie de l'installation domotique.

Un logiciel d'assistance à la configuration des télécommandes peut être fourni pour éviter à l'utilisateur de devoir reproduire toutes les manipulations qui sont nécessaires à la configuration d'une télécommande réelle. Ce logiciel d'assistance peut être contenu sur le disque support de données numériques contenant le logiciel d'émulation qui a été remis à l'utilisateur par le distributeur de télécommandes ou être téléchargé via le réseau internet. Ainsi, outre un mode de fonctionnement de la télécommande virtuelle strictement identique à la télécommande réelle, il est possible de bénéficier des fonctionnalités de l'ordinateur pour faciliter certaines opérations de programmation. Le logiciel d'assistance comprend des menus spécifiques facilitant la programmation de scénarios, la personnalisation d'icônes, etc.

La télécommande virtuelle permettant également d'enregistrer des noms dans les actionneurs, dans les capteurs ou dans les autres unités de commande de l'installation, cette opération est facilitée par le logiciel d'assistance et l'usage du clavier de l'ordinateur.

Grâce à cette invention, d'importants problèmes logistiques de prêts de télécommandes peuvent être résolus. En effet, en faisant l'hypothèse, que tous les utilisateurs disposent d'un ordinateur, il suffit aux distributeurs de télécommandes de fournir un transmetteur TSV à brancher sur leur ordinateur et un logiciel d'émulation de télécommande.

L'ordinateur personnel peut être remplacé par tout dispositif de grande diffusion présentant à la fois une capacité à charger et exécuter des programmes, une interface homme-machine adaptée, et les moyens de communication décrits. Un tel dispositif peut par exemple comprendre un assistant personnel ou un téléphone mobile évolué.

Les liens de communication décrits précédemment entre la télécommande, le transmetteur et les actionneurs utilisent des ondes radios. Cependant, les uns ou les autres de ces liens peuvent bien évidemment utiliser d'autres moyens et notamment des ondes infrarouges.

## Revendications

1. Procédé de test et d'installation d'une télécommande (RCU) pour commander des éléments (ACT1, ACT2, ACT3) d'un réseau domotique destinés à la gestion de la sécurité ou du confort thermique ou lumineux dans un bâtiment, comprenant l'utilisation d'un logiciel (ALS) d'émulation de la télécommande dans un ordinateur (PCU) pour définir une télécommande virtuelle (VRCU), et la configuration de la télécommande virtuelle pour permettre la commande d'éléments du réseau, **caractérisé en ce que** des droits d'émission sont attribués à la télécommande virtuelle lors de cette configuration et **en ce que** la suppression de ces droits d'émission résulte au moins d'une étape de duplication de la configuration (CFG) de la télécommande virtuelle dans la télécommande.

2. Procédé selon la revendication 1, **caractérisé en ce que** les droits d'émission de la télécommande virtuelle sont en outre supprimés à l'issue d'une durée prédéterminée, comptée en utilisation de la télécommande virtuelle ou à partir de l'installation du logiciel d'émulation.

3. Procédé selon l'une des revendications précédentes, **caractérisé en ce que** la phase de chargement d'un logiciel d'émulation de la télécommande dans un ordinateur est faite via internet.

4. Procédé selon l'une des revendications précédentes, **caractérisé en ce que** la phase de configuration de la télécommande virtuelle comprend un chargement dans l'ordinateur d'un logiciel d'assistance à la configuration de la télécommande virtuelle et une exécution de ce logiciel.

5. Procédé selon l'une des revendications précédentes, **caractérisé en ce que** l'étape de duplication de la configuration de la télécommande virtuelle à la télécommande comprend une phase de transmission de données de configuration sur le réseau Internet.

6. Procédé selon l'une des revendications précédentes, **caractérisé en ce que** l'étape de duplication de la configuration de la télécommande virtuelle à la télécommande comprend une phase de transmission de données par ondes radio ou infrarouges.

7. Procédé selon l'une des revendications précédentes, **caractérisé en ce que** l'étape de duplication de la configuration de la télécommande virtuelle à la télécommande est accompagnée d'une phase de stockage d'un code d'activation dans la télécommande.

8. Procédé selon l'une des revendications précédentes, **caractérisé en ce que** l'étape de duplication de la configuration de la télécommande virtuelle à la télécommande a lieu automatiquement quand l'ordinateur détecte, dans la zone de portée du transmetteur (TSV), une télécommande non encore programmée de même type que celle émulée dans l'ordinateur.

9. Support de données comprenant un logiciel permettant la mise en oeuvre du procédé selon l'une des revendications précédentes.

10. Télécommande (RCU) pour commander des éléments (ACT1, ACT2, ACT3) d'un réseau domotique destinés à la gestion de la sécurité ou du confort thermique ou lumineux dans un bâtiment, **caractérisée en ce qu'**elle comprend une mémoire de configuration (MCFG) et une mémoire de code d'activation (MAC) dont les contenus sont pré-enregistrés, un moyen d'entrée de code d'activation utilisateur et un moyen (CMP) d'activation de la télécommande si le code d'activation utilisateur coïncide avec le code d'activation pré-enregistré et des moyens matériels (ULT) et logiciels (PRG) permettant l'exécution du procédé selon l'une des revendications 1 à 8.

## Claims

1. A method of testing and installing a remote control unit (RCU) for controlling elements (ACT1, ACT2, ACT3) of a home automation network intended for managing security or heat or light comfort in a building, comprising the use of software (ALS) emulating the remote control unit in a computer (PCU) to define a virtual remote control unit (VRCU), and the configuring of the virtual remote control unit to enable the elements of the network to be controlled, wherein sending rights are assigned to the virtual remote control unit at the time of that configuration and wherein the cancellation of these sending rights results at least from a step of copying the configuration (CFG) of the virtual remote control unit in the remote control unit.

2. The method as claimed in claim 1, wherein the sending rights of the virtual remote control unit are also cancelled at the end of a predetermined time, counted when using the virtual remote control unit or from the installation of the emulation software.

3. The method as claimed in one of the preceding claims, wherein the phase for loading remote control unit emulation software into a computer is done via the Internet.

4. The method as claimed in one of the preceding claims, wherein the virtual remote control unit configuration phase comprises loading software into the computer to assist in configuring the virtual remote control unit and running this software.

5. The method as claimed in one of the preceding claims, wherein the step for copying the configuration of the virtual remote control unit to the remote control unit comprises a phase for transmitting configuration data over the Internet network.

6. The method as claimed in one of the preceding claims, wherein the step for copying the configuration of the virtual remote control unit to the remote control unit comprises a phase for transmitting data by radio or infrared waves.

7. The method as claimed in one of the preceding claims, wherein the step for copying the configuration of the virtual remote control unit to the remote control unit is accompanied by a phase for storing an activation code in the remote control unit.

8. The method as claimed in one of the preceding claims, wherein the step for copying the configuration of the virtual remote control unit to the remote control unit takes place automatically when the computer detects, within the range area of the transmitter (TSV), a remote control unit that is not yet programmed of the same type as that emulated in the computer.

9. A data medium comprising software for implementing the method as claimed in claim 1.

10. A remote control unit (RCU) for controlling elements (ACT1, ACT2, ACT3) of a home automation network intended for managing security or heat or light comfort in a building, which comprises a configuration memory (MCFG) and an activation code memory (MAC) the contents of which are prestored, a means of inputting the user activation code and a means (CMP) of activating the remote control unit if the user activation code matches the prestored activation code and hardware means (ULT) and software means (PRG) for executing the method as claimed in one of the claims 1 to 8.

## Patentansprüche

1. Verfahren zum Testen und Installieren einer Fernbedienung (RCU) zum Steuern der Elementen (ACT1, ACT2, ACT3) eines Domotik-Netzes, welche dazu bestimmt sind, in einem Gebäude die Sicherheit und den Komfort bezüglich Wärme und Helligkeit zu steuern, mit Verwendung einer Software (ALS) für die Emulation der Fernbedienung in einem Rechner (PCU), um eine virtuelle Fernbedienung (VRCU) zu definieren, und mit der Konfiguration der virtuellen Fernbedienung, um die Steuerung der Elemente des Netzes zu erlauben, **dadurch gekennzeichnet, dass** die Senderechte der virtuellen Fernbedienung während dieser Konfiguration zugeordnet werden und dass die Unterdrückung dieser Senderechte von wenigstens einem Schritt des Duplizierens der Konfiguration (CFG) der virtuellen Fernbedienung in die Fernbedienung herrührt.

2. Verfahren nach Anspruch 1, **dadurch gekennzeichnet, dass** die Senderechte der virtuellen Fernbedienung ausserdem nach Ablauf einer vorbestimmten Dauer unterdrückt werden, die bei Verwendung der virtuellen Fernbedienung oder vom Zeitpunkt der Installation der Emulationssoftware an gezählt wird.

3. Verfahren nach einem der vorangehenden Ansprüche, **dadurch gekennzeichnet, dass** die Phase des Ladens einer Software für die Emulation der Fernbedienung in einen Rechner über das Internet erfolgt.

4. Verfahren nach einem der vorangehenden Ansprüche, **dadurch gekennzeichnet, dass** die Phase der Konfiguration der virtuellen Fernbedienung ein Laden einer Hilfssoftware zur Unterstützung der Konfiguration der virtuellen Fernbedienung sowie eine Ausführung dieser Software umfasst.

5. Verfahren nach einem der vorangehenden Ansprüche, **dadurch gekennzeichnet, dass** der Schritt des Duplizierens der Konfiguration der virtuellen Fernbedienung eine Phase der Übertragung der Konfigurationsdaten in das Internet umfasst.

6. Verfahren nach einem der vorangehenden Ansprüche, **dadurch gekennzeichnet, dass** der Schritt des Duplizierens der Konfiguration der virtuellen Fernbedienung in die Fernbedienung eine Phase der Übertragung der Daten durch Radio- oder Infrarotwellen umfasst.

7. Verfahren nach einem der vorangehenden Ansprüche, **dadurch gekennzeichnet, dass** der Schritt des Duplizierens der Konfiguration der virtuellen Fernbedienung in die Fernbedienung eine Phase des Speicherns eines Aktivierungscodes in der Fernbedienung umfasst.

8. Verfahren nach einem der vorangehenden Ansprüche, **dadurch gekennzeichnet, dass** der Schritt des Duplizierens der Konfiguration der virtuellen Fernbedienung in die Fernbedienung automatisch stattfindet, wenn der Rechner innerhalb der Reichweite des Senders (TSV) eine noch nicht programmierte Fernbedienung vom selben Typ wie die in den Rechner emulierte entdeckt.

9. Datenträger mit einer Software, welche die Durchführung des Verfahrens nach einem der vorangehenden Ansprüche erlaubt.

10. Fernbedienung (RCU) zum Steuern der Elemente (ACT1, ACT2, ACT3) eines Domotik-Netzes, das dazu bestimmt ist, in einem Gebäude die Sicherheit oder den Komfort bezüglich Wärme oder Helligkeit zu steuern, **dadurch gekennzeichnet, dass** sie folgendes aufweist: einen Speicher für die Konfiguration (MCFG) und einen Speicher für den Aktivierungscode (MAC), deren Inhalte vorgespeichert sind, ein Mittel zur Eingabe des Aktivierungscodes des Benutzers und ein Mittel (CMP) zum Aktivieren der Fernbedienung, wenn der Aktivierungscode des Benutzers mit dem vorgespeicherten Aktivierungscode übereinstimmt und die Hardware (ULT) und die Software (PRG) die Ausführung des Verfahrens nach einem der Ansprüche 1 bis 8 erlauben.
